# EUROPEAN PATENT SPECIFICATION

(11) **EP 1 433 346 B1**
(45) Date of publication and mention of the grant of the patent: **13.05.2009**
(21) Application number: 02708872.3
(22) Date of filing: 15.03.2002
(51) Int. Cl.: H04W 4/02, H04L 29/08

(54) **SYSTEM FOR DELIVERING LOCATION RELATED INFORMATION TO MOBILE TELECOMMUNICATION DEVICES**
SYSTEM ZUM LIEFERN VON POSITIONSBEZOGENEN INFORMATIONEN AN MOBILTELEKOMMUNIKATIONSEINRICHTUNGEN
SYSTEME DELIVRANT A DES DISPOSITIFS DE TELECOMMUNICATION MOBILES DES DONNEES RELATIVES A UNE POSITION

(30) Priority: 26.03.2001 SE 0101087
(43) Date of publication of application: 30.06.2004
(73) Proprietor: Ulbrich, Karl-Heinz, 71640 Ludwigsburg (DE)
(72) Inventor: FRIES, Henrik, Obnex Technologies HB, S-412 96 Göteborg (SE)
(74) Representative: Ostertag, Reinhard
(86) International application number: PCT/SE2002/000504
(87) International publication number: WO 2002/078381

(56) References cited:
- WO-A1-01/01711
- WO-A1-01/05184

## Description

### Field of the invention

The present invention relates to a system for delivering location related information, or location and time related information, to a mobile telecommunication device by means of one or more localization devices, arranged in predetermined key locations, which are used to detect the presence of a mobile telecommunication device within a predetermined vicinity of such a key location, and instruct the detected mobile telecommunication device to initiate a communication with an information server. The information server is then able to select data information related to that specific key location and deliver the selected information to the mobile telecommunication device.
The present invention also relates to a method for delivering location related information, or location and time related information, to a mobile telecommunication device using the aforementioned system.

### Background of the invention

The field of telecommunication messaging has recently been experiencing a period of explosive growth. Of the various technologies that allow text messages to be received and sent over mobile devices, such as palmtops, handhelds or cellular phones, the most familiar and widely utilized is commonly known as short message service (SMS) messaging. One of the reasons is that SMS is a very inexpensive method of communication. Short messaging generally involves the transmission of short (generally up to 140 octets carrying up to 160 characters of text) alphanumeric messages which can be delivered immediately. While the short messages were originally utilized primarily for paging purposes, various additional applications, such as advertising, stock quotations, weather forecast, traffic information, news, or sports broadcasting are now common or expected to be shortly available.

SMS messages can be sent to a huge group of people with the single press of a button. SMS technology also allows for unified messaging as SMS can take on a number of different message formats, including voice mail, e-mail and fax, and allows users to access them from their mobile device.

However, when delivering information to mobile devices, it has to be noticed that some information messages differ from others in that they are strictly associated to a specific location of the recipient, and would appear totally irrelevant when delivered somewhere else. For instance, one can expect a user standing at a bus station to be interested in receiving information on arrival or departure time of the next bus. Such a location and time related information can be delivered, for example in the form of a short message to the user's mobile device, provided that the user is able to address an information request to an appropriate information server, in that case a traffic information center associated to the local bus company. Even if such an information request is properly addressed, the user is still required to provide correct indications on its actual location, in that case from which bus stop he is calling. This operation can be unnecessarily troublesome, particularly if the user is visiting a foreign city, where he is not familiar with the environment. Even assuming that a user knows exactly where he is and which information server he should call to get advised, the task is perhaps hard enough to discourage the user. What is needed, therefore, is to provide a system that allows location related information data to be immediately delivered by an information server to a user's mobile device without the need for the user to previously dial the server's number. More particularly, it would be advantageous to provide a system that spare the user the task of contacting an information server and indicating its actual location.

Various kinds of time and location based computing systems have been proposed, such as, for example, the system disclosed in US Patent No. 5,642,303, wherein a plurality of beacons are disposed in different key locations where they can interact with a user's mobile computer device. By utilizing that system, users are able to establish lists of different things or tasks to be done, and that they wishes to be reminded about when coming to a particular key location, (i.e. his home, his office or his car). By placing their own personal beacons at key locations, users are allowed to build their own infrastructure to provide intelligent location awareness. This location awareness can be leveraged by the computer electronic equipment that the user is carrying, needs no networking or server infrastructure, works indoors, has no line-of-sight restrictions, is compact and inexpensive.

However, such a system is obviously intended to be used as a personal location based notebook, in which all information is of personal character, and has to be programmed in advance by the users themselves. Such a system is certainly very useful for busy or absent-minded users, but it is still adapted to situations where the information source and the information destination is a same entity, namely the user himself.

What is still needed, instead, is a system in which an information source, for example a traffic information center, a tourist information center or the like, is allowed to build its own infrastructure of strategically located beacons that can interact with any kind of properly equipped mobile devices. A user of such a device is then able to place his device in a vicinity of a particular beacon, whereby his device is instructed by the beacon to automatically contact a corresponding server which, in turn, immediately replies that contact by delivering an information message, for example a SMS message, whose content is specific to the actual location of the beacon.

WO 01/01711 Al describes a communication system including an information source and a position transceiver disposed at a broadcast location and coupled to the information source.

The position transceiver broadcasts information from the information source within a broadcast area where the position transceiver is located. The broadcast information includes identification information relating to the information source. A mobile terminal located within the broadcast area comprises first and second transceivers, wherein the first transceiver communicates with the position transceiver and a network communicates with the second transceiver. A database communicates with the network and stores information, which is transmitted to the second transceiver associated with the identification information in response to the database receiving at least the identification information by transmission of the network from the mobile terminal to the database.

### Objects of the invention

A main object of the present invention is to provide a system that meets the aforementioned requirements. That is, a system that allows any information delivery entity to build an infrastructure of localization devices constructed to remotely interact with mobile telecommunication devices (MTD's), such as electronic notebook, portable computers, personal digital assistants (PDA), cellular telephones or any other devices used for communication via mobile telecommunication networks.

An advantage of a system in accordance with the present invention is that it does not require the MTD's to be equipped with any system-specific hardware or software features. Most of the MTD's available today include an interfacing unit for wireless, bidirectional interaction with external devices. Generally, such an interfacing unit consists of a transceiver, for example a IR transceiver, for emission and reception of pulsed digital signals which are encoded in accordance with a commonly accepted protocol, or standard. Thus, for enabling an interaction with a localization device, a user only needs to enable the transceiver function of his MTD.

An object of the present invention, according to a preferred embodiment, is to provide a system in which the interaction between a MTD and a localization device is based on IR communication technology. Accordingly, each localization device includes an interaction unit which mainly consists of a IR transceiver for emission and reception of pulsed IR signals encoded in accordance with a widely utilized protocol, such as for example an IrDA protocol or a Direct IR protocol. In an alternate embodiment of the present invention, a system is provided in which the interaction between a MTD and a localization device is based on so called BlueTooth technology, such that each localization device is equipped with a BlueTooth transceiver for emission and reception of pulsed R/F radiation signals encoded in accordance with a BlueTooth protocol.

Regardless of the manner in which the present invention is implemented, the basic function of a system in accordance with the present invention is to allow an interaction between a localization device and a MTD, which interaction results in that the MTD is instruct to initiate a communication with an information server supported by an information delivery entity. Generally, an instruction signal is sent by the localization device, which instruction signal typically contains at least the address code of the information server to be called, and an identification code specific to the localization device, and on basis of which the location of the MTD can be determined by the information server.

An important feature of the present invention is that the localization devices have no connection to the information server, and are solely used for entering necessary instructions into the MTD. The communication with the server is initiated by the MTD. As a result, a localization device for use in a system in accordance with the present invention does not require any complex hardware or software features nor complicated manufacturing arrangements. Therefore, a localization device can be implemented as a simple, small sized, low cost badge that can be mounted at a huge number of key locations.

In a preferred embodiment of the present invention, the communication between the MTD's and the information server is based on short message service (SMS) messaging. That is, the MTD is instructed by the localization device to send a first SMS message to the information server. That first SMS message is interpreted by the information server as an information request. The first SMS message typically contains the identification code of the localization device that brought the MTD to initiate the communication, the subscription number of the sender, the incoming time of the message, and, if necessary, indications about the kind of information required. The information server can then reply the information request by sending a second SMS message containing the required information selected with respect to the actual location of the recipient.
According to another embodiment of the present invention, the communication between the MTD's and the information server is based on internet applications. For example, the localization device will instruct the MTD to establish an internet connection and pick up the URL associated with the information server, whereby the requested information is made available to the user, for example as a WAP-configurated page displayed on the MTD. Regardless of the form in which the communication is established, it is a basic object of the present invention to provide a system in which a MTD is, preferably on demand of its user, directly brought into cooperation with an information source without active participation of the user. Even if it departs of the main purpose of the invention, it can also be conceived that hidden localization devices can be used, for example for advertising purposes, to initiate a communication without the user being aware of it.

Another object of the present invention is to provide a system in which an information server includes a memory unit for storing information data specific to the key location of every localization device coupled to the system, a recognition unit that allows the server to determine, on basis of a unique identification code, the actual location of a requesting MTD, and a selection unit that selects, from the memory unit, the information specifically related to that actual location. In an alternate embodiment of the present invention, the information server even includes means for identifying the equipment properties of a MTD, for example specific protocols, or internet connection capabilities, in order to select a communication mode suitable for a particular kind of MTD.

Still another object of the present invention is to provide a method for delivering location related information to MTD's utilizing the system described above.

### Summary of the invention

The present invention relates to a system for delivering location related information, or location and time related information, to mobile telecommunication devices, said system including one or more localization devices arranged in predetermined key locations, at least one telecommunication device, at least one information server having an interface to a mobile telecommunication network for communication with said at least one mobile telecommunication device, each mobile telecommunication comprising a short range receiver unit for communication with said localization device and a long range transceiver unit for communication with said mobile telecommunication network, each of said one or more localization devices including an interaction unit for interacting with the receiver unit of a mobile telecommunication device when said mobile telecommunication device is located within a predetermined detection range of said localization device, to remotely activate said mobile telecommunication device so as to initiate a communication between said mobile telecommunication device and said at least one information server, **characterized in that** each localization device comprises one single interaction unit being a short range interacting unit for communication with said mobile telecommunication unit, and is configured and programmed so as to transmit to the mobile telecommunication device communicating therewith data concerning the identity of the localization device as well as an address of the at least one information server so that the user of the mobile telecommunication device need not enter such address.

In a system in accordance with a preferred embodiment of the present invention, said at least one mobile telecommunication device includes an infrared (IR) interfacing unit for reception and emission of IR radiation signals encoded in accordance with a predetermined standard, the system being **characterized in that** each of said one or more localization devices includes an interaction unit for reception and emission of IR radiation signals encoded in accordance with said predetermined standard, for enabling interaction with a mobile telecommunication device through said IR interfacing unit when said mobile telecommunication device is located within a predetermined detection range of a localization device, and said interaction unit includes means for emitting an instruction signal to said mobile telecommunication device through said IR interfacing unit in order to instruct said mobile telecommunication device to transmit an information request through said mobile telecommunication network to said at least one information server.

In a system in accordance with a preferred embodiment of the present invention, said at least one information server includes memory means for storing information data specific to each of said key locations where said one or more localization devices are located; reception means for receiving an information request from a mobile telecommunication device; recognition means for reading a unique identification code, specific to a localization device, from said information request and, upon basis thereof, determining a corresponding key location; selection means for selecting information data specific to the determined corresponding key location ; and communication means for replying said information request by delivering selected information data specific to said determined corresponding key location to said mobile telecommunication device.

The present invention also relates to a method for delivering location related information, or location and time related information, to mobile telecommunication devices, including the steps of providing a mobile telecommunication device connected to a mobile telecommunication network, and equipped with a interfacing unit for emission and reception of radiation signals encoded in accordance with a predetermined standard; positioning a localization device at a key location, said localization device having one single interaction unit being a short range interaction unit for communication with said mobile telecommunication unit for emission and reception of radiation signals encoded in accordance with said predetermined standard; locating said mobile telecommunication device within a predetermined detection range of said localization device so as to enable an interaction between said interfacing unit and said interaction unit; emitting an instruction signal from said interaction unit, said instruction signal including a unique identification code specific to said localization device, and an address code specific to an information server connected to said mobile telecommunication network; and, according to said instruction signal so that the user of the mobile telecommunication device does not need to enter such address code, initiating a communication through said mobile telecommunication network between said mobile telecommunication device and said information server.

The objects, features and advantages of the present invention will become more apparent from the following description when read in conjunction with the accompanying figure in which a preferred embodiment of the invention is shown by way of an illustrative example.

### Brief description of the drawing

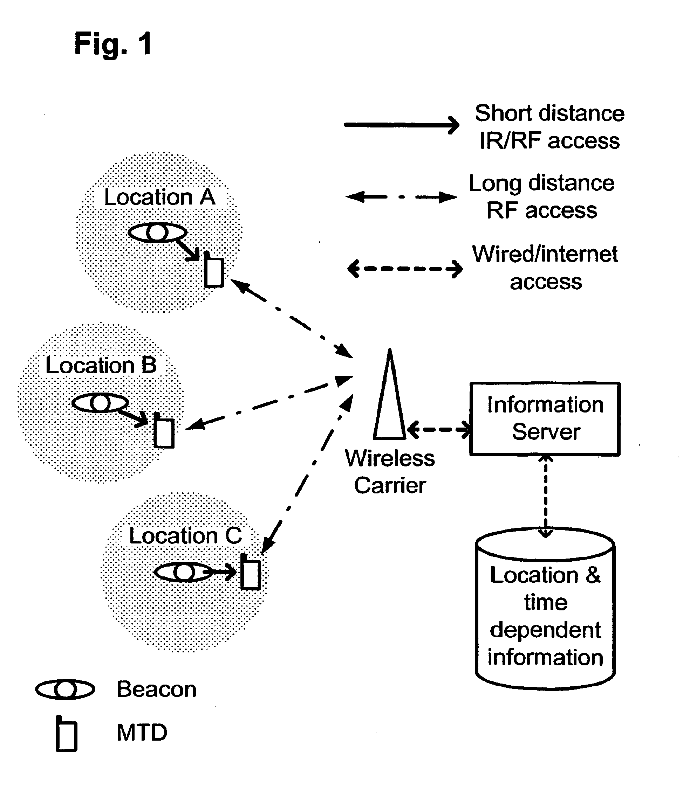

Fig. 1 is a schematic overview of a system in accordance with the present invention

### Detailed description of the preferred embodiments

Fig.1 shows an embodiment of the present invention, in which a plurality of beacons are arranged in predetermined locations (A, B, C) and are brought into interaction with mobile telecommunication devices (MTD) to initiate a communication between the MTD and an information server via a wireless carrier included in a telecommunication network, in such a menner that the information server is able to select time and location related information data from a database and deliver relevant information to the MTD. The interaction between the beacon and the MTD is achieved by means of a short distance IR or R/F access. The communication between the MTD and the wireless carrier is achieved by means of a long distance R/F access. The data transfer between the wireless carrier and the information server is achieved by means of wire or internet access.

An embodiment of the present invention is described herein, in which the communication between a mobile telecommunication device (MTD), such as for example a mobile phone, and a central information server is effected through a cellular telephony network, such as a GSM network, and based on a text messaging technology, such as short message service (SMS), enhanced message service (EMS), multimedia message service (MMS) or the like. Further, the interaction between the MTD and a localization device is based on IR technology, in which pulsed IR light signals are at least partially encoded in accordance with IrDA protocols, which are commonly utilized in conventional mobile phones or electronic notebook today.
However, it will be understood by anyone skilled in the art that a system in accordance with the present invention may be implemented in various manner or in accordance with various standards or protocols, in use today or in the future, without departing from the scope of protection of the invention. For instance, although the following description refers to GSM networks and all basic components thereof, it should be remembered that the scope of the invention is not limited to a particular form of cellular network, and can be applicable to any other cellular communication system, such as for example UMTS, or other standards such as CDMA or TDMA mostly used in the US. Similarly, the short message service SMS is a standard specifically adapted to GSM networks, and it is therefore obvious that such a standard could be replaced by another corresponding standard suitable for another form of cellular network, without departing from the scope of the present invention. Similarly, the choice of using IR technology and IrDA protocols is made principally due to the built-in IR transceivers widely utilized in many cellular phones or other devices. Future implementations of the system can be adapted to the development or spread of new technologies, such as for example R/F based transmitters encoded in accordance with BlueTooth standards. Hence, regardless of the particular technical features on which it is based, the novel feature of the present invention is to provide a system in which a localization device interacts with a MTD so as to introduce the MTD to an information server for further communication therebetween.

In a first embodiment of the present invention, a system for delivering location related information to mobile telecommunication devices (MTD) includes a plurality of stationary localization devices, or beacons, arranged in an infrastructure created by an information delivery service. The beacons are placed at key locations where a user is supposed to be particularly interested in receiving information or advises about an event or an object specifically related to that key location. For instance, an information delivery service may be supported by a public transport company, in which case the beacons are suitably disposed at every station or stop deserved by the company. The beacons may also be placed at different frequently visited points in a city, for example by a taxi company, a restaurant chain, a tourist information center, etc. Preferably, the beacons have a easily recognizable shape and are arranged in a such manner that they easily draw attention, for example as a part of a notice board on which a label of the company, or any other sign that indicates the kind of information that is made available, is clearly disclosed. In other applications, the beacons can be hidden in such a way that a user is not necessarily aware of that a communication is initiated with a server. In that case, the user receives unsolicited information messages such as advertising or any kind of information that the user is supposed to need at a particular location, without actively searching for that information. For example, the MTD can be a vehicle multimedia device arranged in a car, and the beacon can be arranged on or along a highway for traffic information, such as for warning a driver for risk for traffic jam or the like. In general, the beacons are preferably stationary devices arranged in fixed key locations. However, the beacons are not bound to a particular location, since they are assigned a unique identification code which, in turn, can be identified by the server, for example on basis of the latest registrated location of the beacon. In some cases, the beacons can be arranged in a vehicle or any other movable device moving in a predetermined path, whereby the server is able to determine the actual position of the beacon in that predetermined path at every given time.

A beacon in accordance with the present invention includes generally a detection function which is adapted to detect external device equipped with a wireless interface designed in accordance with a particular interaction protocol. A beacon can also include several detection functions, each of which being specifically aimed to detect a particular interaction protocol. For example, a beacon can be provided with several IR detection function for detecting different IR protocols such as IrDA, direct IR or other commonly used protocols. Similarly, a beacon can include both IR and R/F detection functions, for detecting both IrDA-featured devices and BlueTooth-featured devices. A detection function is implemented in accordance with the actual protocol, and comprises generally a periodical emission of a specifically configurated detection signal characteristic for that protocol. The detection signal is sent with a predetermined frequence, for example every five or ten seconds, and the emission is repeated until a properly featured device is caused to reply the detection signal in accordance with the actual protocol. That reply includes generally some form of device identification, in which the beacon is made aware of the presence of a device and the type of interaction expected to take place. In order to reduce power consumption, the detection function of a beacon can, in some case, be set in an inactive mode, or sleep mode in the absence of mobile telecommunication device. In that case, the beacon advantageously includes a passive receiver unit that can react when electromagnetic radiation from a MTD is detected in the vicinity of the beacon. For example, the MTD can be a cellular phone continuously or periodically interacting with a base station or a mobile switching center associated with the cellular telecommunication network, which communication generates electromagnetic radiations that can be registrated by the receiver unit. As soon as such a radiation is detected by the receiver, the detection function of the beacon is immediately set onto an active mode in order to enable detection of the mobile device.

A beacon further includes a control function configurated in accordance with a given protocol. The control function is started upon identification of an external device, and comprises generally the transmission of an instruction signal to the identified device. The instruction signal mainly includes a command of the type <get info at (server address) from (ID code)>. The instruction signal comprises indications about the communication mode in which the information is to be transferred. For example, the MTD can be instructed to send a text message, such as a SMS message, to the information server. Optionally, the MTD can be instruct to establish an internet connection and pick up a URL corresponding to the web representation of the information server in which the requested information is available. This is preferably achieved by downloading a WAP configurated site directly displayed on the MTD. Depending of equipment properties and ability of the MTD, the communication mode may also vary from device to device. For example, the beacon is able to select a communication mode on basis of device identification. Although SMS messaging is preferred, other forms of text messaging can also be implemented, such as e-mail or even fax. Common for all embodiments of the present invention, is that the control function of the beacon instructs a MTD to initiate a communication with the server by sending an information request. The information request can be sent with or without confirmation from the user of the MTD, depending on the case in which information is requested. Typically, the information request is not made visible for the user. Preferably, a short question of the type <get info about...?> can be displayed on the MTD, whereby the user is able to confirm or cancel the query by depressing a YES-key or a NO-key, receptively. The information is preferably delivered as a new SMS message replying the information request. That SMS message may contain optional alternatives for further communication. The SMS message sent by the information server may also include a link to a URL which can be accessed upon confirmation from the user. The communication can also be achieved in several steps in which the server sends menus comprising several optional alternatives that can be easily selected by the user.
An information server for use in a system according to the present invention includes generally an interface to a SMS center coupled to the cellular network. The server includes an intern database for storing information data relative to every location where a beacon is coupled to the system, to ensure entire coverage of the beacon infrastructure associated to the system. The information data stored in the database is classified with respect to location and time of incoming information request. The information server includes a reception unit that reads, from the incoming SMS messages, several parameters such as <caller ID>, <incoming time>, and <beacon ID>. All parameters are embedded into predetermined configurations according to SMS protocols. The server is programmed to match these parameters with an information data stored in the database and to reply the information requests with SMS messages containing the selected information data. Optionally, the server further includes an equipment identification function that is able to determine the communication mode which is optimally adapted to the originating device. For example, the equipment identification function is able to determine, on basis of parameters contained in a SMS message, whether the sending MTD is equipped with internet access capabilities or not, and if it is, to deliver the selected information via an internet connection by directing the MTB to a particular URL associated to the information server.

Hereinafter, three concrete examples will be given to illustrate different fields of applications in which the system can be advantageously used.

### Example 1

In a first application example, given only for illustrative purposes, a beacon is arranged at a bus stop deserved by a public transport company, or at a taxi station deserved by a taxi company, for traffic information purposes. A user is invited to point his MTD toward the beacon, for example at a distance that may vary from contact to up to 20cm. The beacon comprises a detection function for detecting the presence of a MTD in an immediate vicinity of the beacon. Such a detection function is preferably part of IrDA Link Access Protocol and used to search for IrDA-featured devices. Depending on the context in which the beacon is utilized, the detection range for IrDA data signaling can be varied on a case to case basis, typically from contact up to approximately two meters. To reduce the power consumption, a low power version relaxes the range objective for operation from contact through at least 20 cm between low power devices and 30 cm between low power and standard power devices. A IrDA detection signal is emitted periodically, for example every five seconds, until a reply is received from a IrDA-featured device, whereby the device is identified by the beacon, according to IrDA protocols. The beacon is programmed to transfer an IrDA configurated instruction signal to the device, by the mean of which the device is instructed to send a SMS message to the information server. The SMS message contains an identification code specific to the location of the beacon, i.e a particular bus stop or taxi station. The information server is then able to read the identification code and, on basis thereof, determine the location of the user and select an information specific to that location. In the case of a public transport information, the selected information is typically the estimated time remaining until the next vehicle will arrive at the bus stop. The information is selected with respect to both location and time, on basis of the identification code and the incoming time of the SMS message. The selected information is then immediately delivered to the user in the form of a new SMS message. In the case of taxi information, the information server will contact the taxi traffic center in order to localize the nearest taxi in a neighborhood of the identified beacon, and provide an estimation of the time required for that taxi to deserve the corresponding station. The user then receives an indication about the estimated waiting time, and a question on whether he wants to reserve the taxi or not. Upon confirmation from the user, the taxi is sent to the actual station. All communication steps are preferably achieved by means of SMS messages between the user and the server while sparing the user the task of typing any message or manually dialing any number.

### Example 2

In a second application example, even this given only for illustrative purposes, a beacon is installed in a queue number ticket distributor, that provides customers with queue number tickets, for example at a store or a bank office. While picking up a queue number ticket, a user is invited to point his MTD toward the beacon, whereby the beacon initiates a communication between the MTD and a server coupled to the customer queue system. The MTD sends a SMS message containing the queue number given the customer. On basis of the incoming time of the information request, the server is able to calculate an approximate remaining waiting time. The server will keep the customer informed about the actual remaining waiting time by periodically sending new messages with indications on the time remaining until the actual queue number will appear on the distribution display. When the remaining waiting time is less than a predetermined value, the server sends a signal for alerting the customer.

### Example 3

In a third application example, still given only for illustrative purposes, a beacon is mounted in a door lock handling device, and arranged outside a locked door. In that case, a door lock handling server includes a database containing a list of telephone numbers corresponding to the users which are authorized to unlock the actual door. By directing his phone toward the beacon, a user will enable an interaction between the phone and the beacon, resulting in that the phone sends a SMS message to the door lock handling server, which message contains the sender's phone number and the beacon identification code corresponding to the actual door. The server is then able to compare the sender's phone number with the list of authorized numbers stored in the database section corresponding to the actual door. If the sender's number is found among the authorized numbers, the door lock handling server unlocks the actual door. For increased security, an algorithm can advantageously be implemented in the beacon in order to generate new coded information depending on time, the telephone number, other information or combination thereof, that is also available in the door lock handling server. The sent SMS message contains the coded information. The door lock handling server comprises the same algorithm and is then able to compare the coded information contained in an incoming SMS message with the coded information generated by the algorithm in the door lock handling server. If the information is identical with that generated by the algorithm, the door lock handling server unlocks the door.

The examples given above illustrates different way to utilize a system in accordance with the present invention, and makes apparent that the system can be exploited in various other purposes without departing from the scope of protection of the present invention as it is defined in the following, appended claims.

## Claims

1. A system for delivering location related information
or location and time related information to mobile telecommunication devices, said system including
a) one or more localization devices arranged in predetermined key locations,
b) at least one telecommunication device, and
c) at least one information server having an interface to a mobile telecommunication network for communication with said at least one mobile telecommunication device,
d) each mobile telecommunication device comprising
da) a short range receiver unit for communication with said localization device, and
db) a long range transceiver unit for communication with said mobile telecommunication network,
e) each of said one or more localization devices including an interaction unit for interacting with a mobile telecommunication device when said mobile telecommunication device is located within a predetermined detection range of said localization device, to remotely activate said mobile telecommunication device so as to initiate a communication between said mobile telecommunication device and said at least one information server,
**characterized in that**
f) each localization device comprises one single interaction unit being a short range interacting unit for communication with said mobile telecommunication unit, and
g) is configured and programmed so as to transmit to the mobile telecommunication device communicating therewith data concerning the identity of the localization device as well as an address of the at least one information server so that the user of the mobile telecommunication device need not enter such adress.

2. A system as defined in claim 1, **characterized in that** each of said one or more localization devices includes detection means for detecting the presence of a mobile telecommunication device within said predetermined detection range of said localization device.

3. A system as defined in claim 2, **characterized in that** each of said one or more localization devices includes detection means for continuously or intermitently emitting a detection signal, and
said at least one mobile telecommunication device includes a transceiver unit which can receives said detection signal from a localization device when said mobile telecommunication device is located within said predetermined detection range of said localization device, whereby an interaction is enabled between said mobile telecommunication device and said localization device.

4. A system as defined in claim 2, in which said at least one telecommunication device emits electromagnetic radiation signals for interaction with said mobile telecommunication network, **characterized in that** each of said one or more localization devices includes detection means for detecting said electromagnetic radiation signals from a mobile telecommunication device when said mobile telecommunication device is located within said predetermined detection range of said localization device, whereby an interaction is enabled between said mobile telecommunication device and said localization device.

5. A system as defined in any one of claims 1 to 4, **characterized in that** said interaction unit includes control means for transmitting an instruction signal to a mobile telecommunication device, to instruct said mobile telecommunication device to transmit an information request through said mobile telecommunication network to said at least one information server.

6. A system as defined in claim 5, in which each of said one or more localization device is assigned a unique identification code, **characterized in that** said unique identification code is comprised in said instruction signal and forwarded within said information request to said at least one information server, whereby an actual location of said mobile telecommunication device originating said information request can be determined by said at least one information server upon basis of said unique identification code.

7. A system as defined in any one of claims 1 to 6, **characterized in that** said interaction unit is constructed for emission and reception of electromagnetic radiation signals within infrared frequency range, and
said at least one mobile telecommunication device includes a transceiver unit comprising an infrared linking device.

8. A system as defined in any one of claims 1 to 6, **characterized in that** said interaction unit is constructed for emission and reception of electromagnetic radiation signals within radiowave frequency range, and
said at least one mobile telecommunication device includes a transceiver unit comprising an radiowave linking device.

9. A system as defined in claim 7, **characterized in that** said infrared electromagnetic radiation signals are at least partially encoded in accordance with a predetermined standard, preferably a IrDA standard.

10. A system as defined in claim 8, **characterized in that** said radiowave electromagnetic radiation signals are at least partially encoded in accordance with a predetermined standard, preferably a BlueTooth standard.

11. A system as defined in claim 1, **characterized in that** said at least one mobile telecommunication device includes an infrared (IR) interfacing unit for reception and emission of IR radiation signals encoded in accordance with a predetermined standard and each of said one or more localization devices includes an interaction unit for reception and emission of IR radiation signals encoded in accordance with said predetermined standard, for enabling interaction with a mobile telecommunication device through said IR interfacing unit when said mobile telecommunication device is located within a predetermined detection range of a localization device, and said interaction unit includes means for emitting an instruction signal to said mobile telecommunication device through said IR interfacing unit in order to instruct said mobile telecommunication device to transmit an information request through said mobile telecommunication network to said at least one information server.

12. A system as defined in claim 11, **characterized in that** said instruction signal is an IR radiation signal encoded in accordance with IrDA standard.

13. A system as defined in any one of claims 11 and 12, **characterized in that** each of said one or more localization device is assigned an unique identification code, such that each instruction signal originated from a particular localization device comprises said unique identification code specific to said particular localization device.

14. A system as defined in any one of claims 11 to 13, in which said at least one information server is coupled to a text message handling system, such as a short message service center (SMSC), **characterized in that** said instruction signal instructs said mobile telecommunication device to send a text message, such as a short message service (SMS) message, to said at least one information server.

15. A system as defined in any one of claims 11 to 14, in which said at least one information server is coupled to a text message handling system, such as a electronic mail server, **characterized in that** said instruction signal instructs said mobile telecommunication device to send a text message, such a electronic mail, to said at least one information server.

16. A system as defined in any one of claims 11 to 14, in which said at least one information server is coupled to an internet server, **characterized in that** said instruction signal instructs said mobile telecommunication device to establish an internet connection to access a predetermined address location corresponding to said at least one information server.

17. A system as defined in any one of claims 11 to 16, **characterized in that** said at least one mobile telecommunication device is a cellular telephone equipped with a IR interfacing unit.

18. A system as defined in any one of claims 11 to 16, **characterized in that** said at least one mobile telecommunication device is a portable computer or "personal digital assistant" (PDA) equipped with a IR interfacing unit.

19. A system as defined in any one of claims 11 to 16, **characterized in that** said at least one mobile telecommunication device is a vehicle multimedia device equipped with a IR interfacing unit.

20. A system as defined in any one of claims 11 to 19, **characterized in that** said mobile telecommunication network is a GSM cellular network.

21. A system as defined in any one of claims 11 to 19, **characterized in that** said mobile telecommunication network is a UMTS cellular network.

22. A system as defined in any one of claims 11 to 19, **characterized in that** said mobile telecommunication network is a CDMA cellular network.

23. A system as defined in any one of claims 11 to 19, **characterized in that** said mobile telecommunication network is a mobile internet network.

24. A system as defined in any one of claims 1 to 23, **characterized in that** said at least one information server includes
memory means for storing information data specific to each of said key locations where said one or more localization devices are located,
reception means for receiving an information request from a mobile telecommunication device,
recognition means for reading a unique identification code, specific to a localization device, from said information request and, upon basis thereof, determining a corresponding key location,
selection means for selecting information data specific to the determined corresponding key location, and
communication means for replying said information request by delivering selected information data specific to said determined corresponding key location to said mobile telecommunication device.

25. A system as defined in claim 24, in which said information data specific to each of said key locations is time dependent, **characterized in that** said selection means includes a clock function for determining an incoming time of an information request, and, upon basis thereof, selecting information data specific to said incoming time.

26. A system as defined in any one of claims 24 and 25, in which said one or more localization devices are caused to move according to a predetermined routing program, **characterized in that** said recognition means includes a clock function for determining an incoming time of an information request including a unique identification code, and, upon basis of said incoming time and said unique identification code, determining a corresponding key location.

27. A system as defined in any one of claims 24 to 26, **characterized in that** said reception means includes a caller identification function for determining, upon reception of an information request, an address or subscription number of the originating mobile telecommunication device.

28. A system as defined in any one of claims 24 to 27, **characterized in that** said reception means includes a equipment identification function for determining, upon reception of an information request, equipment properties specific to the originating mobile telecommunication device.

29. A system as defined in claim 28, **characterized in that** said communication means includes a equipment selection function for selecting a communication mode adapted to said equipment properties specific to said originating mobile telecommunication device.

30. A system as defined in any one of claims 24 to 29, **characterized in that** said communication means replies said information request by sending an information message containing said selected information data specific to said determined corresponding key location to said mobile telecommunication device.

31. A system as defined in any one of claims 24 to 30, **characterized in that** said communication means replies said information request by sending an information message containing a link to an internet address location in which said selected information data specific to said determined corresponding key location is available.

32. A method for delivering location related information or
location and time related information to mobile telecommunication devices, including the steps of:
- providing a mobile telecommunication device connected to a mobile telecommunication network, and equipped with a interfacing unit for emission and reception of radiation signals encoded in accordance with a predetermined standard,
- positioning a localization device at a key location, said localization device having one single interaction unit being a short range interaction unit for communication with said mobile telecommunication device for emission and reception of radiation signals encoded in accordance with said predetermined standard,
- locating said mobile telecommunication device within a predetermined detection range of said localization device so as to enable an interaction between said interfacing unit and said interaction unit,
- emitting an instruction signal from said interaction unit, said instruction signal including a unique identification code specific to said localization device, and an address code specific to an information server connected to said mobile telecommunication network, according to said instruction signal, so that the user of the mobile telecommunication device does not need to enter such address code,
- initiating a communication through said mobile telecommunication network between said mobile telecommunication device and said information server.

33. A method as defined in claim 32, in which said communication initiated through said mobile telecommunication network between said mobile telecommunication device and said information server, includes the steps of:
sending an information request from said mobile telecommunication device to said address code specific to said information server, said information request including said identification code,
enabling said information server to read said identification code from said information request and, on basis thereof, determining said key location,
from information data stored in said information server, selecting information data specific to said key location, and
replying said information request by delivering the so selected information data through said mobile telecommunication network to said mobile telecommunication device.

34. A method as defined in claim 32, in which said communication initiated through said mobile telecommunication network between said mobile telecommunication device and said information server, includes the steps of:
establishing a connection between said mobile telecommunication device and an internet server,
linking said telecommunication device to an internet address location corresponding to said address code specific to said information server, and
from said internet address location, selecting information data specific to said key location.

35. A method as defined in any one of claims 32 to 34, **characterized in that** said interfacing unit is a IR transceiver

36. A method as defined in any one of claims 32 and 34, **characterized in that** said interfacing unit is radiowave transceiver, such as a BlueTooth transceiver unit.

## Patentansprüche

1. Ein System zum Bereitstellen von standortbezogenen Informationen oder standort- und zeitbezogenen Informationen an mobile Telekommunikationsgeräte, aufweisend
a) ein oder mehrere Lokalisierungsgeräte, die an vordefinierten Schlüsselstellen angeordnet sind,
b) mindestens ein Telekommunikationsgerät, und
c) mindestens einen Informationsserver, der eine Schnittstelle zu einem Mobilkommunikationsnetzwerk zur Kommunikation mit dem mindestens einen mobilen Telekommunikationsgerät hat,
d) wobei jedes mobile Telekommunikationsgerät
da) eine Nahbereichs-Empfangseinheit zur Kommunikation mit dem Lokalisierungsgerät und
db) eine Fernbereichs-Transceivereinheit zur Kommunikation mit dem Mobilkommunikationsnetzwerk aufweist, und
e) wobei jedes der ein oder mehreren Lokalisierungsgeräten eine Wechselwirkungseinheit aufweist, die mit einem mobilen Telekommunikationsgerät wechselwirkt, wenn das mobile Kommunikationsgerät sich in einem vorgegebenen Erfassungsbereich des Lokalisierungsgeräts befindet, um aus der Ferne das mobile Telekommunikationsgerät zu aktivieren und so eine Kommunikation zwischen dem mobilen Telekommunikationsgerät und dem mindestens einen Informationsserver zu initialisieren,
**dadurch gekennzeichnet, dass**
f) jedes Lokalisierungsgerät eine einzige Wechselwirkungseinheit, die eine Nahbereichs-Wechselwirkungseinheit zur Kommunikation mit dem mobilen Telekommunikationsgerät ist, aufweist und
g) derart konfiguriert und programmiert ist, dass dem damit kommunizierenden mobilen Telekommunikationsgerät Daten übermittelt werden, die die Identität des Lokalisierungsgeräts sowie eine Adresse des mindestens einen Informationsservers betreffen, so dass der Benutzer des mobilen Telekommunikationsgeräts eine solche Adresse nicht einzugeben braucht.

2. System nach Anspruch 1, **dadurch gekennzeichnet, dass** jedes der ein oder mehreren Lokalisierungsgeräte ein Detektionsmittel aufweist, um die Anwesenheit eines mobilen Telekommunikationsgeräts innerhalb des vorgegebenen Erfassungsbereichs des Lokalisierungsgeräts zu erfassen.

3. System nach Anspruch 2, **dadurch gekennzeichnet, dass** jedes der ein oder mehreren Lokalisierungsgeräte ein Detektionsmittel aufweist, um kontinuierlich oder mit Unterbrechungen ein Detektionssignal auszusenden, und dass das mindestens eine mobile Telekommunikationsgerät eine Transceivereinheit aufweist, die das Detektionssignal von einem Lokalisierungsgerät empfangen kann, wenn sich das mobile Telekommunikationsgerät innerhalb des vorgegebenen Erfassungsbereichs des Lokalisierungsgeräts befindet, wodurch eine Wechselwirkung zwischen dem mobilen Telekommunikationsgerät und dem Lokalisierungsgerät ermöglicht wird.

4. System nach Anspruch 2, bei dem das mindestens eine Telekommunikationsgerät elektromagnetische Strahlungssignale ausgibt, um mit dem Mobiltelekommunikationsnetzwerk wechselzuwirken, **dadurch gekennzeichnet, dass** jedes der ein oder mehreren Lokalisierungsgeräte ein Detektionsmittel aufweist, um die elektromagnetischen Strahlungssignale von einem mobilen Telekommunikationsgerät zu erfassen, wenn das mobile Telekommunikationsgerät sich innerhalb des vorgegebenen Erfassungsbereichs des Lokalisierungsgeräts befindet, wodurch eine Wechselwirkung zwischen dem mobilen Telekommunikationsgerät und dem Lokalisierungsgerät ermöglicht wird.

5. System nach einem der Ansprüche 1 bis 4, **dadurch gekennzeichnet, dass** die Wechselwirkungseinheit ein Steuermittel aufweist, um ein Befehlssignal zu einem mobilen Telekommunikationsgerät zu übertragen, um das mobile Telekommunikationsgerät anzuweisen, eine Informationsanforderung über das Mobiltelekommunikationsnetzwerk an den mindestens einen Informationsserver zu übertragen.

6. System nach Anspruch 5, bei dem jedem der ein oder mehreren Lokalisierungsgeräte ein eindeutiger Identifikationscode zugeordnet ist, **dadurch gekennzeichnet, dass** der eindeutige Identifikationscode in dem Befehlssignal enthalten ist und mit der Informationsanforderung an den mindestens einen Informationsserver weitergeleitet wird, wodurch ein momentaner Standort des mobilen Telekommunikationsgeräts, das die Informationsanforderung absetzt, von dem mindestens einen Informationsserver auf der Grundlage des eindeutigen Identifikationscodes bestimmt werden kann.

7. System nach einem der Ansprüche 1 bis 6, **dadurch gekennzeichnet, dass** die Wechselwirkungseinheit zum Aussenden und Empfangen von elektromagnetischen Strahlungssignalen innerhalb des infraroten Frequenzbereichs ausgelegt ist und dass das mindestens eine mobile Telekommunikationsgerät eine Transceivereinheit aufweist, die eine Infrarotverbindungseinrichtung umfasst.

8. System nach einem der Ansprüche 1 bis 6, **dadurch gekennzeichnet, dass** die Wechselwirkungseinheit zum Aussenden und Empfangen von elektromagnetischen Strahlungssignalen innerhalb des Radiowellenfrequenzbereichs ausgelegt ist, und dass das mindestens eine mobile Telekommunikationsgerät eine Transceivereinheit aufweist, die eine Radiowellenverbindungseinrichtung umfasst.

9. System nach Anspruch 7, **dadurch gekennzeichnet, dass** die infraroten elektromagnetischen Strahlungssignale zumindest teilweise in Übereinstimmung mit einem vorgegebenen Standard, vorzugsweise einem Ir-DA-Standard, codiert sind.

10. System nach Anspruch 8, **dadurch gekennzeichnet, dass** die elektromagnetischen Radiowellenstrahlungssignale zumindest teilweise in Übereinstimmung mit einem vorgegebenen Standard, vorzugsweise einem Bluetooth-Standard, codiert sind.

11. System nach Anspruch 1, **dadurch gekennzeichnet, dass** das mindestens eine mobile Telekommunikationsgerät eine Infrarot (IR)-Schnittstelleneinheit zum Empfangen und Aussenden von IR-Strahlungssignalen umfasst, die in Übereinstimmung mit einem vorgegebenen Standard codiert sind, und dass jedes der ein oder mehreren Lokalisierungsgeräte eine Wechselwirkungseinheit zum Empfangen und Aussenden von IR-Strahlungssignalen aufweist, die in Übereinstimmung mit dem vorgegebenen Standard codiert sind, um eine Wechselwirkung mit einem mobilen Telekommunikationsgerät durch die IR-Schnittstelleneinheit zu ermöglichen, wenn das mobile Telekommunikationsgerät sich innerhalb eines vorgegebenen Erfassungsbereichs eines Lokalisierungsgeräts befindet, und dass die Wechselwirkungseinheit Mittel umfasst, um ein Befehlssignal an das mobile Telekommunikationsgerät durch die IR-Schnittstelleneinheit auszusenden, um das mobile Telekommunikationsgerät anzuweisen, eine Informationsanforderung durch das Mobiltelekommunikationsnetzwerk an den mindestens einen Informationsserver zu richten.

12. System nach Anspruch 11, **dadurch gekennzeichnet, dass** das Befehlssignal ein IR-Strahlungssignal ist, das in Übereinstimmung mit dem IrDA-Standard codiert ist.

13. System nach einem der Ansprüche 11 oder 12, **dadurch gekennzeichnet, dass** jedem der ein oder mehreren Lokalisierungsgeräte derart ein eindeutiger Identifikationscode zugeordnet ist, dass jedes Befehlssignal, das von einem bestimmten Lokalisierungsgerät ausgeht, den eindeutigen Identifikationscode aufweist, der speziell zu dem bestimmten Lokalisierungsgerät gehört.

14. System nach einem der Ansprüche 11 bis 13, bei dem der mindestens eine Informationsserver mit einem Textnachrichten-Handhabungssystem, wie einer Kurznachrichtendienstzentrale (SMSC), gekoppelt ist, **dadurch gekennzeichnet, dass** das Befehlssignal das mobile Telekommunikationsgerät anweist, eine Textnachricht, wie eine Kurznachrichtendienstnachricht (SMS) an den mindestens einen Informationsserver zu senden.

15. System nach einem der Ansprüche 11 bis 14, bei dem der mindestens eine Informationsserver mit einem Textnachrichten-Handhabungssystem, wie einem E-Mail-Server, gekoppelt ist, **dadurch gekennzeichnet, dass** das Befehlssignal das mobile Telekommunikationsgerät anweist, eine Textnachricht, wie eine E-Mail, an den mindestens einen Informationsserver zu senden.

16. System nach einem der Ansprüche 11 bis 14, bei dem der mindestens eine Informationsserver mit einem Internetserver gekoppelt ist, **dadurch gekennzeichnet, dass** das Befehlssignal das mobile Telekommunikationsgerät anweist, eine Internetverbindung aufzubauen, um auf einen vorgegebenen Adressort zuzugreifen, der dem mindestens einen Informationsserver entspricht.

17. System nach einem der Ansprüche 11 bis 16, **dadurch gekennzeichnet, dass** das mindestens eine Telekommunikationsgerät ein Mobiltelefon ist, das mit einer Infrarotschnittstelleneinheit ausgerüstet ist.

18. System nach einem der Ansprüche 11 bis 16, **dadurch gekennzeichnet, dass** das mindestens eine Telekommunikationsgerät ein tragbarer Computer oder ein "persönlicher digitaler Assistent" (PDA) ist, der mit einer IR-Schnittstelleneinheit ausgerüstet ist.

19. System nach einem der Ansprüche 11 bis 16, **dadurch gekennzeichnet, dass** das mindestens eine Telekommunikationsgerät ein Fahrzeug-Multimediagerät ist, das mit einer IR-Schnittstelleneinheit ausgerüstet ist.

20. System nach einem der Ansprüche 11 bis 19, **dadurch gekennzeichnet, dass** das Mobiltelekommunikationsnetzwerk ein GSM-Mobilfunknetz ist.

21. System nach einem der Ansprüche 11 bis 19, **dadurch gekennzeichnet, dass** das Mobiltelekommunikationsnetzwerk ein UMTS-Mobilfunknetz ist.

22. System nach einem der Ansprüche 11 bis 19, **dadurch gekennzeichnet, dass** das Mobiltelekommunikationsnetzwerk ein CDMA-Mobilfunknetz ist.

23. System nach einem der Ansprüche 11 bis 19, **dadurch gekennzeichnet, dass** das Mobiltelekommunikationsnetzwerk ein mobiles Internetnetzwerk ist.

24. System nach einem der Ansprüche 1 bis 23, **dadurch gekennzeichnet, dass** der mindestens eine Informationsserver
ein Speichermittel, um Informationsdaten zu Speichern, die für jede der Schlüsselstellen spezifisch sind, an denen sich das eine oder die mehreren Lokalisierungsgeräte befinden,
ein Empfangsmittel, um eine Informationsanforderung von einem mobilen Telekommunikationsgerät zu empfangen,
ein Erkennungsmittel, um einen eindeutigen Identifikationscode, der für ein Lokalisierungsgerät spezifisch ist, aus der Informationsanforderung auszulesen und auf dessen Basis eine zugehörige Schlüsselstelle zu bestimmen,
ein Auswahlmittel, um Informationsdaten auszuwählen, die für die bestimmte zugehörige Schlüsselstelle spezifisch sind, und
ein Kommunikationsmittel umfasst, um auf diese Informationsanforderung zu antworten, indem ausgewählte Informationsdaten, die spezifisch für die bestimmte zugehörige Schlüsselstelle sind, an das mobile Telekommunikationsgerät übermittelt werden.

25. System nach Anspruch 24, bei dem die Informationsdaten, die spezifisch für jede der Schlüsselstellen sind, zeitabhängig sind, **dadurch gekennzeichnet, dass** das Auswahlmittel eine Uhrfunktion umfasst, um eine Eingangszeit einer Informationsanforderung zu bestimmen und auf deren Basis Informationsdaten auszuwählen, die spezifisch für die Eingangszeit sind.

26. System nach einem der Ansprüche 24 oder 25, bei dem die ein oder mehreren Lokalisierungsgeräte hinsichtlich eines vorgegebenen Routenprogramms bewegt werden, **dadurch gekennzeichnet, dass** das Erkennungsmittel eine Uhrfunktion umfasst, um eine Eingangszeit einer Informationsanforderung zu bestimmen, die einen eindeutigen Identifikationscode beinhaltet, und um auf Basis der Eingangszeit und des eindeutigen Identifikationscodes eine zugehörige Schlüsselstelle zu bestimmen.

27. System nach einem der Ansprüche 24 bis 26, **dadurch gekennzeichnet, dass** das Empfangsmittel eine Anruferidentifikationsfunktion umfasst, um auf den Empfang einer Informationsanforderung hin eine Adresse oder eine Beziehernummer des originären mobilen Telekommunikationsgeräts zu bestimmen.

28. System nach einem der Ansprüche 24 bis 27, **dadurch gekennzeichnet, dass** das Empfangsmittel eine Ausrüstungsidentifikationsfunktion umfasst, um auf den Empfang einer Informationsanforderung hin spezifische Ausrüstungseigenschaften des originären mobilen Telekommunikationsgeräts zu bestimmen.

29. System nach Anspruch 28, **dadurch gekennzeichnet, dass** das Kommunikationsmittel eine Ausrüstungsauswahlfunktion aufweist, um einen Kommunikationsmodus auszuwählen, der an die spezifischen Ausrüstungseigenschaften des originären mobilen Telekommunikationsgeräts angepasst ist.

30. System nach einem der Ansprüche 24 bis 29, **dadurch gekennzeichnet, dass** das Kommunikationsmittel die Informationsanforderung beantwortet, indem eine Informationsnachricht an das mobile Telekommunikationsgerät gesendet wird, die die ausgewählten Informationsdaten enthält, die spezifisch für die bestimmte zugehörige Schlüsselstelle sind.

31. System nach einem der Ansprüche 24 bis 30, **dadurch gekennzeichnet, dass** das Kommunikationsmittel auf die Informationsanforderung antwortet, indem eine Informationsnachricht gesendet wird, die eine Verknüpfung zu einem Internetadressort enthält, an dem die ausgewählten Informationsdaten vorliegen, die spezifisch für die bestimmte zugehörige Schlüsselstelle sind.

32. Verfahren zum Bereistellen von standortbezogenen Informationen oder standort- und zeitbezogenen Informationen an mobile Telekommunikationsgeräte, umfassend die Schritte:
- Bereitstellen eines mobilen Telekommunikationsgeräts, das mit einem Mobiltelekommunikationsnetzwerk verbunden ist und mit einer Schnittstelleneinheit zum Aussenden und Empfangen von Strahlungssignalen ausgerüstet ist, die in Übereinstimmung mit einem vorgegebenen Standard codiert sind;
- Positionieren eines Lokalisierungsgeräts an einer Schlüsselstelle, wobei das Lokalisierungsgerät eine einzige Wechselwirkungseinheit hat, die eine Nahbereichs-Wechselwirkungseinheit zur Kommunikation mit der mobilen Telekommunikationseinheit zum Aussenden und Empfangen von Strahlungssignalen aufweist, die in Übereinstimmung mit dem vorgegebenen Standard codiert sind;
- Anordnen des mobilen Telekommunikationsgeräts innerhalb eines vorgegebenen Erfassungsbereichs des Lokalisierungsgeräts, so dass eine Wechselwirkung zwischen der Schnittstelleneinheit und der Wechselwirkungseinheit ermöglicht wird;
- Aussenden eines Befehlssignals aus der Wechselwirkungseinheit, wobei das Befehlssignal einen eindeutigen Identifikationscode, der spezifisch für das Lokalisierungsgerät ist, und einen Adresscode beinhaltet, der spezifisch für einen Informationsserver ist, der mit dem Mobiltelekommunikationsnetzwerk verbunden ist, gemäß dem Befehlssignal, so dass der Benutzer des mobilen Telekommunikationsgeräts einen solchen Adresscode nicht einzugeben braucht;
- Initiieren einer Kommunikation durch das Mobiltelekommunikationsnetzwerk zwischen dem mobilen Telekommunikationsgerät und dem Informationsserver.

33. Verfahren nach Anspruch 32, bei dem die Kommunikation, die durch das Mobiltelekommunikationsnetzwerk zwischen dem mobilen Telekommunikationsgerät und dem Informationsserver initiiert wird, die Schritte aufweist:
Senden einer Informationsanforderung von dem mobilen Telekommunikationsgerät zu dem Adresscode, der spezifisch für den Informationsserver ist, wobei die Informationsanforderung den Identifikationscode beinhaltet;
Ermöglichen, dass der Informationsserver den Identifikationscode aus der Informationsanforderung ausliest und auf dessen Basis die Schlüsselstelle bestimmt;
Auswählen von Informationsdaten, die spezifisch für die Schlüsselstelle sind, aus Informationsdaten, die in dem Informationsserver gespeichert sind; und
Beantworten der Informationsanforderung, indem die derart ausgewählten Informationsdaten durch das Mobiltelekommunikationsnetzwerk zu dem mobilen Telekommunikationsgerät übermittelt werden.

34. Verfahren nach Anspruch 32, bei dem die Kommunikation, die durch das Mobiltelekommunikationsnetzwerk zwischen dem mobilen Telekommunikationsgerät und dem Informationsserver initiiert wird, die Schritte aufweist:
Aufbauen einer Verbindung zwischen dem mobilen Telekommunikationsgerät und einem Internetserver;
Verbinden des Telekommunikationsgeräts mit einem Internetadressort, der zu dem Adresscode gehört, der für den Informationsserver spezifisch ist, und
Auswählen von Informationsdaten aus dem Internetadressstandort, die spezifisch für die Schlüsselstelle sind.

35. Verfahren nach einem der Ansprüche 32 bis 34, **dadurch gekennzeichnet, dass** die Schnittstelleneinheit ein IR-Transceiver ist.

36. Verfahren nach einem der Ansprüche 32 bis 34, **dadurch gekennzeichnet, dass** die Schnittstelleneinheit ein Radiowellentransceiver ist, z.B. eine Bluetooth-Transceivereinheit.

## Revendications

1. Système destiné à délivrer des informations liées à la position ou des informations liées à la position et au temps à des dispositifs de télécommunication mobiles, ledit système comprenant
a) un ou plusieurs dispositifs de localisation disposés à des positions clés prédéterminées,
b) au moins un dispositif de télécommunication, et
c) au moins un serveur d'informations ayant une interface avec un réseau de télécommunication mobile pour une communication avec ledit au moins un dispositif de télécommunication mobile,
d) chaque dispositif de télécommunication mobile comprenant
da) une unité de récepteur à courte portée pour une communication avec ledit dispositif de localisation, et
db) une unité d'émetteur-récepteur a longue portée pour une communication avec ledit réseau de télécommunication mobile,
e) chacun desdits un ou plusieurs dispositifs de localisation comprenant une unité d'interaction pour interagir avec un dispositif de télécommunication mobile lorsque ledit dispositif de télécommunication mobile est situé dans une portée ou plage de détection prédéterminée dudit dispositif de localisation, pour activer à distance ledit dispositif de télécommunication mobile de manière à initier une communication entre ledit dispositif de télécommunication mobile et ledit au moins un serveur d'informations,
**caractérisé en ce que**
f) chaque dispositif de localisation comprend une seule unité d'interaction qui est une unité d'interaction à courte portée pour une communication avec ladite unité de télécommunication mobile, et
g) est configuré et programmé de manière à transmettre au dispositif de télécommunication mobile communiquant avec lui des données concernant l'identité du dispositif de localisation ainsi qu'une adresse du au moins un serveur d'informations de sorte que l'utilisateur du dispositif de télécommunication mobile n'ait pas à entrer cette adresse.

2. Système selon la revendication 1, **caractérisé en ce que** chacun desdits un ou plusieurs dispositifs de localisation comprend un moyen de détection pour détecter la présence d'un dispositif de télécommunication mobile dans ladite portée ou plage de détection prédéterminée dudit dispositif de localisation.

3. Système selon la revendication 2, **caractérisé en ce que** chacun desdits un ou plusieurs dispositifs de localisation comprend un moyen de détection pour émettre de manière continue ou intermittente un signal de détection, et
ledit au moins un dispositif de télécommunication mobile comprend une unité d'émetteur-récepteur qui peut recevoir ledit signal de détection d'un dispositif de localisation lorsque ledit dispositif de télécommunication mobile est situé dans ladite portée ou plage de détection prédéterminée dudit dispositif de localisation, grâce à quoi une interaction est permise entre ledit dispositif de télécommunication mobile et ledit dispositif de localisation.

4. Système selon la revendication 2, dans lequel ledit au moins un dispositif de télécommunication émet des signaux de rayonnements électromagnétiques pour une interaction avec ledit réseau de télécommunication mobile, **caractérisé en ce que** chacun desdits un ou plusieurs dispositifs de localisation comprend un moyen de détection pour détecter lesdits signaux de rayonnements électromagnétiques d'un dispositif de télécommunication lorsque ledit dispositif de télécommunication mobile est situé dans ladite portée ou plage de détection prédéterminée dudit dispositif de localisation, grâce à quoi une interaction est permise entre ledit dispositif de télécommunication mobile et ledit dispositif de localisation.

5. Système selon l'une quelconque des revendications 1 à 4, **caractérisé en ce que** ladite unité d'interaction comprend un moyen de commande pour transmettre un signal d'instruction à un dispositif de télécommunication mobile, pour donner comme instruction audit dispositif de télécommunication mobile de transmettre une demande d'informations sur ledit réseau de télécommunication mobile audit au moins un serveur d'informations.

6. Système selon la revendication 5, dans lequel chacun desdits un ou plusieurs dispositifs de localisation se voit affecter un code d'identification unique, **caractérisé en ce que** ledit code d'identification unique est inclus dans ledit signal d'instruction et est retransmis dans ladite demande d'informations audit au moins un serveur d'informations, grâce à quoi une position réelle dudit dispositif de télécommunication mobile à l'origine de ladite demande d'informations peut être déterminée par ledit au moins un serveur d'informations sur la base dudit code d'identification unique.

7. Système selon l'une quelconque des revendications 1 à 6, **caractérisé en ce que** ladite unité d'interaction est réalisée pour l'émission et la réception de signaux de rayonnements électromagnétiques dans la plage de fréquences des infrarouges, et
ledit au moins un dispositif de télécommunication mobile comprend une unité d'émetteur-récepteur comprenant un dispositif de liaison infrarouge.

8. Système selon l'une quelconque des revendications 1 à 6, **caractérisé en ce que** ladite unité d'interaction est réalisée pour l'émission et la réception de signaux de rayonnements électromagnétiques dans la plage de fréquences des ondes radioélectriques, et
ledit au moins un dispositif de télécommunication mobile comprend une unité d'émetteur-récepteur comprenant un dispositif de liaison à ondes radioélectriques.

9. Système selon la revendication 7, **caractérisé en ce que** lesdits signaux de rayonnements électromagnétiques infrarouges sont au moins partiellement codés conformément à un standard prédéterminé, de préférence un standard IrDA.

10. Système selon la revendication 8, **caractérisé en ce que** lesdits signaux de rayonnements électromagnétiques à ondes radioélectriques sont au moins partiellement codés conformément à un standard prédéterminé, de préférence un standard BlueTooth.

11. Système selon la revendication 1, **caractérisé en ce que** ledit au moins un dispositif de télécommunication mobile comprend une unité d'interfaçage infrarouge (IR) pour la réception et l'émission de signaux de rayonnements IR codés conformément à un standard prédéterminé et chacun desdits un ou plusieurs dispositifs de localisation comprend une unité d'interaction pour la réception et l'émission de signaux de rayonnements IR codés conformément audit standard prédéterminé, pour permettre l'interaction avec un dispositif de télécommunication mobile par le biais de ladite unité d'interfaçage IR lorsque ledit dispositif de télécommunication mobile est situé dans une portée ou plage de détection prédéterminée d'un dispositif de localisation, et ladite unité d'interaction comprend au moins un moyen pour émettre un signal d'instruction audit dispositif de télécommunication mobile par le biais de ladite unité d'interfaçage IR de manière à donner pour instruction audit dispositif de télécommunication mobile de transmettre une demande d'informations sur ledit réseau de télécommunication mobile audit au moins un serveur d'informations.

12. Système selon la revendication 11, **caractérisé en ce que** ledit signal d'instruction est un signal de rayonnement IR codé conformément au standard IrDA.

13. Système selon l'une quelconque des revendications 11 et 12, **caractérisé en ce que** chacun desdits un ou plusieurs dispositifs de localisation se voit affecter un code d'identification unique, de sorte que chaque signal d'instruction ayant pour origine un dispositif de localisation particulier comprend ledit code d'identification unique spécifique audit dispositif de localisation particulier.

14. Système selon l'une quelconque des revendications 11 à 13, dans lequel ledit au moins un serveur d'informations est couplé à un système de gestion de messages de texte, tel qu'un centre de service de messages courts (SMSC), **caractérisé en ce que** ledit signal d'instruction donne pour instruction audit dispositif de télécommunication mobile d'envoyer un message de texte, tel qu'un message de service de messages courts (SMS), audit au moins un serveur d'informations.

15. Système selon l'une quelconque des revendications 11 à 14, dans lequel ledit au moins un serveur d'informations est couplé à un système de gestion de messages de texte, tel qu'un serveur de courrier électronique, **caractérisé en ce que** ledit signal d'instruction donne pour instruction audit dispositif de télécommunication mobile d'envoyer un message de texte, tel qu'un courrier électronique, audit au moins un serveur d'informations.

16. Système selon l'une quelconque des revendications 11 à 14, dans lequel ledit au moins un serveur d'informations est couplé à un serveur Internet, **caractérisé en ce que** ledit signal d'instruction donne pour instruction audit dispositif de télécommunication mobile d'établir une connexion Internet pour accéder à une position d'adresse prédéterminée correspondant audit au moins un serveur d'informations.

17. Système selon l'une quelconque des revendications 11 à 16, **caractérisé en ce que** ledit au moins un dispositif de télécommunication mobile est un téléphone cellulaire équipé d'une unité d'interfaçage IR.

18. Système selon l'une quelconque des revendications 11 à 16, **caractérisé en ce que** ledit au moins un dispositif de télécommunication mobile est un ordinateur portable ou "assistant numérique personnel" (PDA) équipé d'une unité d'interfaçage IR.

19. Système selon l'une quelconque des revendications 11 à 16, **caractérisé en ce que** ledit au moins un dispositif de télécommunication mobile est un dispositif multimédia de véhicule équipé d'une unité d'interfaçage IR.

20. Système selon l'une quelconque des revendications 11 à 19, **caractérisé en ce que** ledit réseau de télécommunication mobile est un réseau cellulaire GSM.

21. Système selon l'une quelconque des revendications 11 à 19, **caractérisé en ce que** ledit réseau de télécommunication mobile est un réseau cellulaire UMTS.

22. Système selon l'une quelconque des revendications 11 à 19, **caractérisé en ce que** ledit réseau de télécommunication mobile est un réseau cellulaire CDMA.

23. Système selon l'une quelconque des revendications 11 à 19, **caractérisé en ce que** ledit réseau de télécommunication mobile est un réseau Internet mobile.

24. Système selon l'une quelconque des revendications 1 à 23, **caractérisé en ce que** ledit au moins un serveur d'informations comprend
un moyen de mémoire pour mémoriser des données d'informations spécifiques à chacune desdites positions clés où lesdits un ou plusieurs dispositifs de localisation sont situés,
un moyen de réception pour recevoir à une demande d'informations d'un dispositif de télécommunication mobile,
un moyen de reconnaissance pour lire un code d'identification unique, spécifique à un dispositif de localisation, à partir d'une demande d'informations et, sur cette base, déterminer une position clé correspondante,
un moyen de sélection pour sélectionner des données d'informations spécifiques à la position clé correspondante déterminée, et
un moyen de communication pour répondre à ladite demande d'informations en délivrant audit dispositif de télécommunication mobile les données d'informations sélectionnées spécifiques à ladite position clé correspondante déterminée.

25. Système selon la revendication 24, dans lequel lesdites données d'informations spécifiques à chacune desdites positions clés dépendent du temps, **caractérisé en ce que** ledit moyen de sélection comprend une fonction d'horloge pour déterminer un instant ou temps d'entrée d'une demande d'informations, et, sur la base de celui-ci, sélectionner des données d'informations spécifiques audit instant ou temps d'entrée.

26. Système selon l'une quelconque des revendications 24 et 25, dans lequel lesdits un ou plusieurs dispositifs de localisation sont amenés à se déplacer conformément à un programme de routage prédéterminé, **caractérisé en ce que** ledit moyen de reconnaissance comprend une fonction d'horloge pour déterminer un instant ou un temps d'entrée d'une demande d'informations comprenant un code d'identification unique, et, sur la base dudit instant ou temps d'entrée et dudit code d'identification unique, déterminer une position clé correspondante.

27. Système selon l'une quelconque des revendications 24 à 26, **caractérisé en ce que** ledit moyen de réception comprend une fonction d'identification d'appelant pour déterminer, lors de la réception d'une demande d'informations, une adresse ou un numéro d'abonnement du dispositif de télécommunication mobile origine.

28. Système selon l'une quelconque des revendications 24 à 27, **caractérisé en ce que** ledit moyen de réception comprend une fonction d'identification d'équipement pour déterminer, lors de la réception d'une demande d'informations, des propriétés d'équipement spécifiques au dispositif de télécommunication mobile origine.

29. Système selon la revendication 28, **caractérisé en ce que** ledit moyen de communication comprend une fonction de sélection d'équipement pour sélectionner un mode de communication adapté auxdites propriétés d'équipement spécifiques audit dispositif de télécommunication mobile origine.

30. Système selon l'une quelconque des revendications 24 à 29, **caractérisé en ce que** ledit moyen de communication répond à ladite demande d'informations en envoyant audit dispositif de télécommunication mobile un message d'informations contenant lesdites données d'informations sélectionnées spécifiques à ladite position clé correspondante déterminée .

31. Système selon l'une quelconque des revendications 24 à 30, **caractérisé en ce que** ledit moyen de communication répond à ladite demande d'informations en envoyant un message d'informations contenant un lien vers une position d'adresse Internet à laquelle lesdites données d'informations sélectionnées spécifiques à ladite position clé correspondante déterminée sont disponibles.

32. Procédé pour délivrer des informations liées à la position ou des informations liées à la position et au temps à des dispositifs de télécommunication mobiles, comprenant les étapes consistant à :
- fournir un dispositif de télécommunication mobile connecté à un réseau de télécommunication mobile, et équipé d'une unité d'interfaçage pour l'émission et la réception de signaux de rayonnements codés conformément à un standard prédéterminé,
- positionner un dispositif de localisation à une position clé, ledit dispositif de localisation ayant une seule unité l'interaction qui est une unité d'interaction à courte portée pour une communication avec ladite dispositif de télécommunication mobile pour l'émission et la réception de signaux de rayonnements codés conformément audit standard prédéterminé,
- localiser ledit dispositif de télécommunication mobile dans une portée ou plage de détection prédéterminée dudit dispositif de localisation de manière à permettre une interaction entre ladite unité d'interfaçage et ladite unité d'interaction,
- émettre un signal d'instruction à partir de ladite unité d'interaction, ledit signal d'instruction comprenant un code d'identification unique spécifique audit dispositif de localisation, et un code d'adresse spécifique à un serveur d'informations connecté audit réseau de télécommunication mobile, conformément audit signal d'instruction, de sorte que l'utilisateur du dispositif de télécommunication mobile n'ait pas besoin d'entrer ce code d'adresse,
- initier une communication sur ledit réseau de télécommunication mobile entre ledit dispositif de télécommunication mobile et ledit serveur d'informations.

33. Procédé selon la revendication 32, dans lequel ladite communication initiée sur ledit réseau de télécommunication mobile entre ledit dispositif de télécommunication mobile et ledit serveur d'informations comprend les étapes consistant à :
envoyer une demande d'informations dudit dispositif de télécommunication mobile audit code d'adresse spécifique audit serveur d'informations, ladite demande d'informations comprenant ledit code d'identification,
permettre audit serveur d'informations de lire ledit code d'identification à partir de ladite demande d'informations et, sur la base de celui-ci, déterminer ladite position clé,
à partir des données d'informations mémorisées dans ledit serveur d'informations, sélectionner des données d'informations spécifiques à ladite position clé, et
répondre à ladite demande d'informations en délivrant les données d'informations ainsi sélectionnées sur ledit réseau de télécommunication mobile audit dispositif de télécommunication mobile.

34. Procédé selon la revendication 32, dans lequel ladite communication initiée sur ledit réseau de télécommunication mobile entre ledit dispositif de télécommunication mobile et ledit serveur d'informations comprend les étapes consistant à :
établir une connexion entre ledit dispositif de télécommunication mobile et un serveur Internet,
associer ledit dispositif de télécommunication à une position d'adresse Internet correspondant audit code d'adresse spécifique audit serveur d'informations, et
à partir de ladite position d'adresse Internet, sélectionner des données d'informations spécifiques à ladite position clé.

35. Procédé selon l'une quelconque des revendications 32 à 34, **caractérisé en ce que** ladite unité d'interfaçage est un émetteur-récepteur IR.

36. Procédé selon l'une quelconque des revendications 32 et 34, **caractérisé en ce que** ladite unité d'interfaçage est un émetteur-récepteur à ondes radioélectriques, tel qu'une unité d'émetteur-récepteur BlueTooth.
